# EUROPEAN PATENT SPECIFICATION

(11) **EP 4 536 433 B1**
(45) Date of publication and mention of the grant of the patent: **20.05.2026**
(21) Application number: 23732008.0
(22) Date of filing: 06.06.2023
(51) Int. Cl.: B23D 47/02, B23D 59/00, B27B 27/08, B27B 27/10

(54) **WORKPIECE PROCESSING BENCH AND ITS USE**
WERKSTÜCKBEARBEITUNGSBANK UND IHRE VERWENDUNG
BANC D'USINAGE DE PIÈCES ET SON UTILISATION

(30) Priority: 07.06.2022 NO 20220651
(43) Date of publication of application: 16.04.2025
(73) Proprietor: SBTOOLS AS, 4820 Froland (NO)
(72) Inventor: ANDERSEN, Ole Tommy Bech, 4820 Froland (NO); ASBJØRNSEN, Jan Kåre, 4820 Froland (NO); ØVRUM, Lars, 4812 Kongshavn (NO)
(74) Representative: Acapo Onsagers AS
(86) International application number: PCT/EP2023/065096
(87) International publication number: WO 2023/237540

(56) References cited:
- EP-A1- 1 671 763
- US-A1- 2015 073 579
- US-A1- 2018 178 299
- US-A1- 2021 046 596

## Description

### The subject area of the invention

The invention relates to a workpiece processing bench. More precisely, the invention relates to an automatically adjustable positioning arm in a mounting beam in the workpiece processing bench, a workpiece processing system in which the workpiece processing bench is included and a method for positioning a workpiece stopper on the positioning arm in relation to the workpiece processing tool.

### Background

Within the construction industry and other sectors where cutting, milling or drilling is done to measure, precise positioning of materials and workpieces is needed before processing. As an example, carpenters working with wood will need precise cutting of studs, panels, floor parquet, window moldings and door moldings etc. By using a system that automatically sets a workpiece stopper in the correct position in relation to a tool that processes the workpiece, a faster and more accurate processing is achieved. For instance, when cutting planks with a miter saw, you will be able to achieve faster cutting and fewer incorrect cuts. Such a principle can be called "Automatic Linear Positioning" in a device or tool. Hereafter abbreviated ALP.

There are several solutions for achieving linear positioning of materials and workpieces. There are advanced solutions within the industry, which moves a workpiece automatically to the correct position, and then performs operations such as cutting, milling, drilling, etc. The finished workpiece is then brought out of the machine. Also, more manual principles for positioning workpieces before machining exist. One principle is that a material stopper positions itself at the correct distance to the tool, and then the operator manually places the workpiece against this stopper.

A faster work process and better accuracy is achieved by having ALP together with processing tools such as, as an example, when cutting, milling and drilling. Such solutions are used in several hand craft sectors. What often prevents the use and investment in such solutions is that they often involve large, heavy and expensive machines and support equipment. There is a need for systems and techniques that make ALP as light, compact and affordable as possible. The systems should be easy to transport and easy to put into operation at the place of work. For example. the size should be adapted to the loading length of ordinary vehicles.

Manual work benches with a moveable support for workpieces are found on the market. A typical example of such a workbench can be found on the homepage of Toolstation: https://www.toolstation.com/einhell-mitre-saw-stand/p76447 . However, none of the lightweight work benches are provided with ALP and the very dusty environment associated with a workpiece processing tool makes it difficult to produce a portable workbench with ALP that is both robust and lightweight

US 2018/178299 A1 discloses a movable and demountable workpiece processing bench comprising a hollow mounting beam for mounting equipment, a workpiece processing tool releasably mounted on the mounting beam, wherein a positioning arm which is mounted movably in a longitudinal direction inside the hollow mounting beam and which includes a workpiece stopper at an end distal from the workpiece processing tool, a drive unit, mounted on the mounting beam comprising displacement means to move the positioning arm to a desired position, a length control unit for controlling the displacement means, where the length control unit comprises a wireless communication unit configured to at least receive information from a user-controlled device about a desired length from a first end of a workpiece to a processing position on the workpiece, and where the length control unit is further configured to position the workpiece stopper of the positioning arm at a desired length from the workpiece processing tool, by moving the positioning arm so that the workpiece can be processed at a desired length from the first end of the workpiece when it rests against the workpiece stopper.

One purpose of the invention is to provide a workpiece processing bench comprising ALP that is both compact when transporting, and can be easily set up at a new workplace

A further purpose of the invention is to provide a workpiece processing bench that is easy to adapt to different tools, as well as to adapt sizes of workpieces.

### Summary of the invention

According to the invention, there is provided a movable and demountable workpiece processing bench The workpiece processing bench comprises a hollow mounting beam for mounting equipment and a workpiece processing tool releasably mounted on the mounting beam. The workpiece processing bench further comprises a positioning arm which is mounted movably in a longitudinal direction within the hollow mounting beam and which comprises a workpiece stopper at an end distal from the workpiece processing tool and a drive unit which is mounted on the mounting beam. The drive unit comprises displacement means which are configured to move the positioning arm to a desired position and a length control unit for controlling the displacement means, where the length control unit comprises a length gauge unit configured to measure the length L_{measured} from the workpiece stopper to a predetermined surface of the workpiece processing tool. The length control unit further comprises a wireless communication unit configured to at least receive information from a user-controlled unit about a desired length L_{workpiece} from a first end of a workpiece to a processing location on the workpiece. The length control unit is further configured to position the workpiece stopper of the positioning arm at a desired length L_{workpiece} from the workpiece processing tool, by moving the positioning arm until L_{measured} = L_{workpiece} so that the workpiece can be processed at a desired length L_{workpiece} from the first end of the workpiece when it abuts the workpiece stopper parallel to center line S.

The workpiece processing tool can be a circular saw, a miter saw, a drill, a milling machine, a cutter, an angle grinder, a stone saw, a laser torch, or any other tool that can be easily operated by a user on a movable and demountable workpiece processing bench.

According to the invention, the displacement means comprise a pinion or drive gear in the drive unit which engages with a rack of teeth on the positioning arm. A rack of teeth can, for example, be a row of millings or cut-outs in the positioning arm or a row of teeth projecting from the positioning arm .

In an embodiment of the workpiece processing bench, the length gauge unit comprises a rotary encoder which is connected to the drive gear.

In an embodiment of the workpiece processing bench, the length gauge comprises an optical sensor attached to the mounting beam which reads absolute length indications attached to the positioning arm.

In yet an embodiment of the workpiece processing bench, the positioning arm comprises a U-profile of steel with an opening facing downwards and a U-profile of a plastic material with an opening facing upwards and which fits into the steel U-profile and where the rack of teeth is incorporated into the part of the U-profile of a plastic material which faces downwards.

In yet an embodiment of the workpiece processing bench, the drive gear in the drive unit is made of a plastic material.

In yet an embodiment of the workpiece processing bench, the drive unit is mounted under the mounting beam.

In yet an embodiment of the workpiece processing bench, the mounting beam comprises an upper surface where both sides of a workpiece stopper track are completely covered to prevent material residues and impurities from penetrating the displacement means and positioning arm.

In yet an embodiment of the workpiece processing bench, the positioning arm is rollingly supported in the mounting beam.

In yet an embodiment of the workpiece processing bench, the workpiece processing bench comprises an extension of the positioning arm which is joined together with the positioning arm by means of an extension piece which fits inside the extension and the positioning arm and is fixed with screws.

In yet an embodiment of the workpiece processing bench, the drive unit comprises an electric motor. The electric motor can be powered by batteries or the local power grid.

In yet an embodiment of the workpiece processing bench, the drive unit comprises a drive belt between the electric motor and the gear drive.

In another aspect of the invention, it is described a workpiece processing system comprising a workpiece processing bench as described and a user-controlled unit configured to send information about desired lengths for processing of a workpiece to the wireless communication unit.

In an embodiment of the workpiece processing system where the length gauge is a rotary encoder, the workpiece processing system comprises a calibration unit configured to determine the distance between the workpiece stopper and a predetermined surface on the workpiece processing tool and to send the determined distance to the communication unit of the length control unit.

According to another aspect of the invention, there is provided a method for using the workpiece processing system as described. The procedure includes the steps:
a. To receive, using the communication unit in the length control unit, a desired length L_{workpiece} from the user-controlled unit.
b. To measure, using the length gauge, the length, L_{measured}, from the workpiece stopper to a predetermined surface of the workpiece processing tool.
c. To move the positioning arm using the displacement means until L_{measured} = L_{workpiece}, if the length control unit registers that L_{measured} is different from L_{workpiece}.

### Brief description of the figures

In order to improve the understanding of the invention, some figures have been attached where the same feature has the same reference in the different figures.
Fig. 1 shows an embodiment of the workpiece processing bench.
Fig. 2 shows an embodiment of the mounting beam.
Fig. 3 shows an embodiment of the positioning arm which can be extended.
Fig. 4a - c shows advantageous embodiments of the positioning arm comprising a U-profile.
Fig. 5 a shows an embodiment of the drive unit mounted on the mounting beam.
Fig. 5b shows the actual drive unit from fig. 5a.
Fig. 5c shows an embodiment of the drive unit with a rotary encoder.
Fig. 6 shows an embodiment of length indications on the positioning arm.
Fig. 7 shows the positioning arm from fig. 6 with workpiece stopper attached.
Fig. 8 shows an optical reader which reads the length indication.
Fig. 9 shows the positioning arm from fig. 6-8 which is driven by a drive wheel.
Fig. 10 shows a capacitive reader for reading a capacitive length indication.
Fig. 11 shows a hand-held unit which includes a length measuring function.
Fig. 12 shows a schematic representation of the drive unit.
Fig. 13 shows a schematic representation of an embodiment of the length control unit
Fig. 14 shows a procedure for using the workpiece processing system.
Fig. 15 shows the center line S of the mounting beam and L_{measured} and L_{workpiece}.

### Detailed description

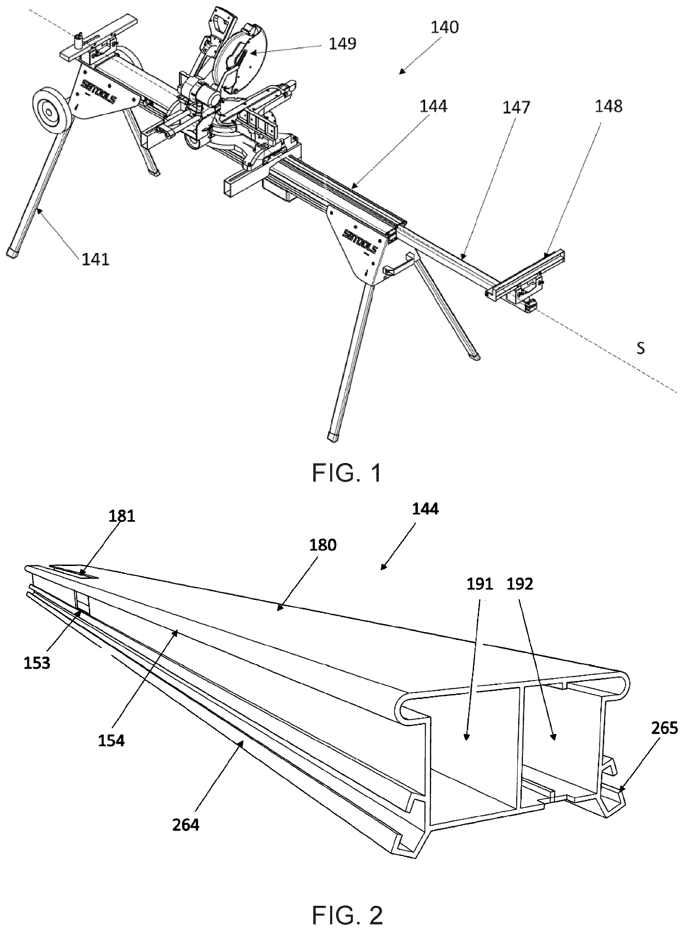

The invention describes a movable and demountable/foldable workpiece processing bench 140 as shown in fig. 1. In most cases, the workpiece processing bench 140 will be a saw bench, but it is also conceivable with other ways of processing a workpiece such as drilling, marking, planing, machining or milling. The workpiece processing bench 140 comprises a hollow mounting beam 144 for mounting equipment. The mounting beam 144 will typically have a hollow profile made of one or more metals including aluminum or iron, but other materials such as plastic or a composite material are also conceivable. Fig. 1 shows two support legs 141 which support each end of the mounting beam at a suitable working height. Outer and inner side or end is used to describe positioning along a center line S of the mounting beam, where the outer side is distal from a workpiece processing tool and the inner side is the opposite way.

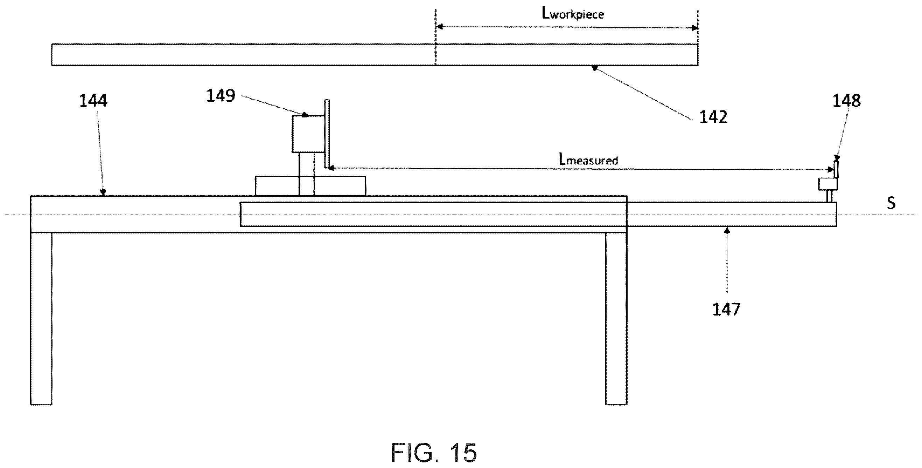

On the mounting beam 144 seen in fig. 2, a workpiece processing tool 149 is mounted, see fig 1. The workpiece processing tool is preferably releasably mounted on the mounting beam. In order to achieve good stability, the mounting beam often includes a projecting mounting formation 154 which fits into a corresponding formation in a fastening piece for the processing tool. As shown in fig. 1, a positioning arm 147 is mounted inside the mounting beam 144 which is movable in a direction along the center line S inside the hollow mounting beam 144 and which comprises a workpiece stopper 148 at an end distal from the workpiece processing tool 149. The center line S is shown in Figures 1 and 15. The workpiece stopper 148, workpiece processing tool 149 and positioning arm 147 lie along the center line S and the workpiece processing tool will typically perform its process in a volume above an upper surface 180 of the mounting beam vertically above the center line S.

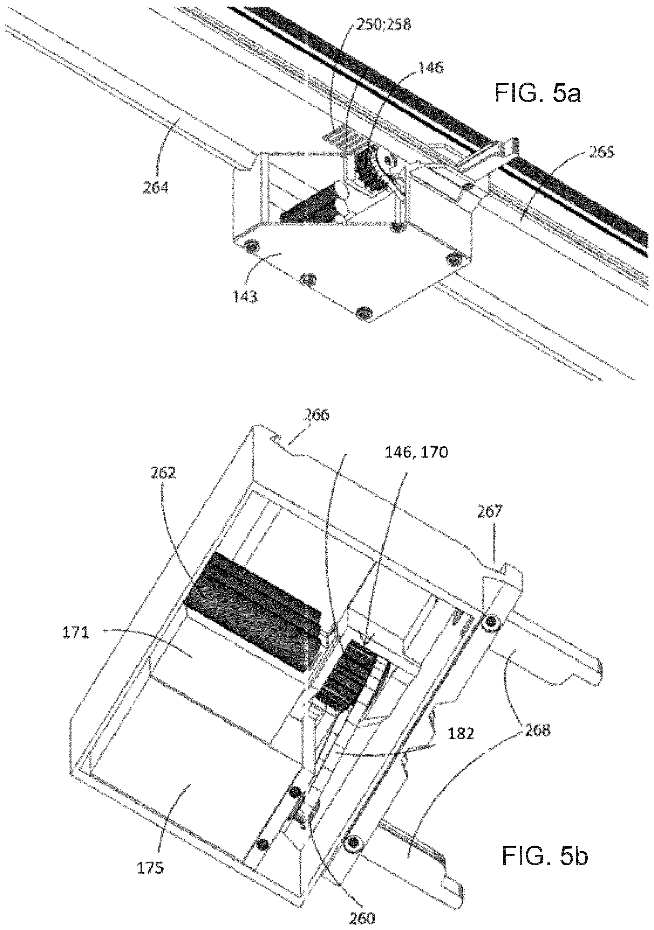

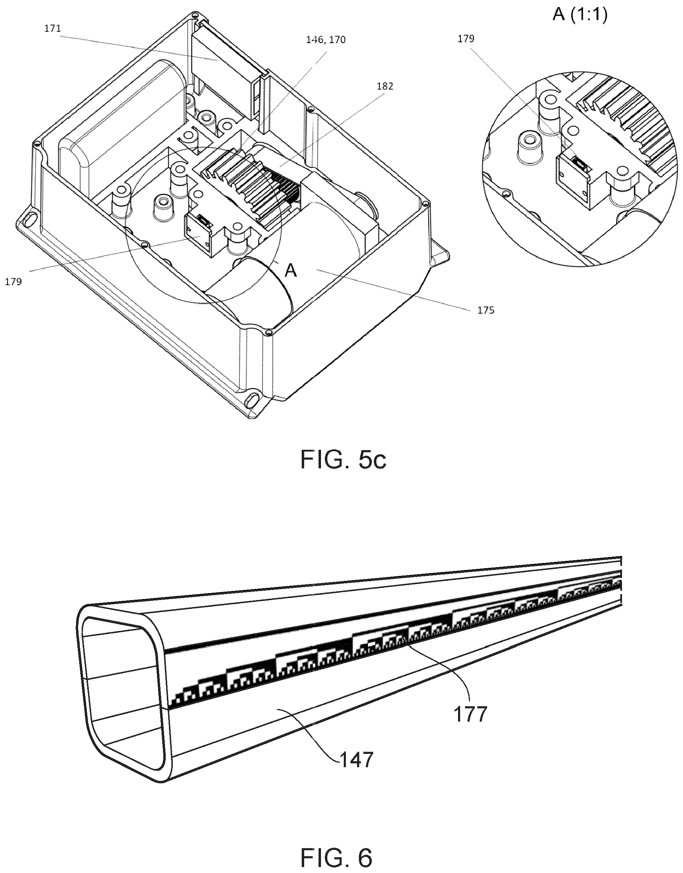

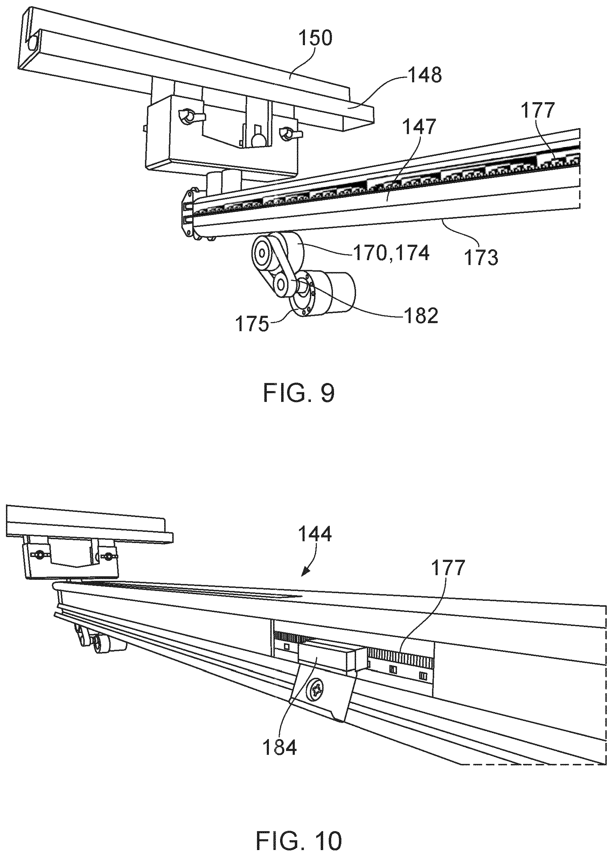

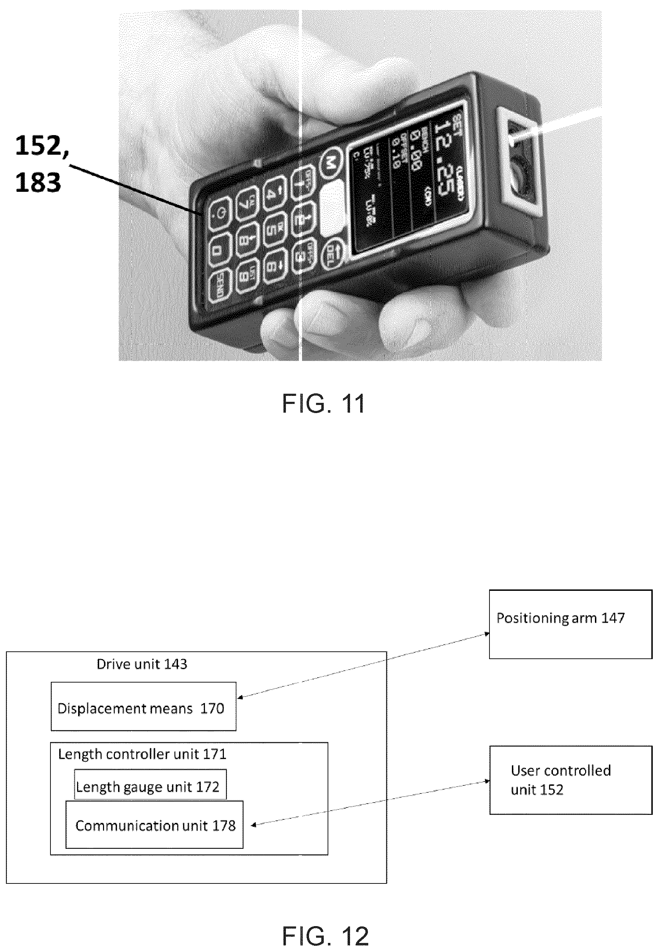

The workpiece processing bench 140 comprises a drive unit 143, which is mounted on the mounting beam 144. The drive unit is preferably mounted below the mounting beam, as shown in fig. 5a and b, by means of a first and second locking formation 266, 267 and associated locking clamps 268 on the drive unit which engages in first and second fastening rails 264, 265 on the mounting beam 144. The drive unit comprises displacement means 170 for moving the workpiece stopper 148 to the positioning arm 147 to a desired position in relation to the workpiece processing tool 149. The drive unit comprises a length controller unit 171 comprising a wireless communication unit 178 and a length gauge 172. The drive unit 143 can be seen in its physical form in fig. 1 and 5 and as a principle sketch in fig. 12. The length gauge is configured to measure the length L_{measured} from the workpiece stopper 148 to the workpiece processing tool 149 as indicated in FIG. 15. More precisely, the length is measured from a contact surface 150, see Fig. 9, against which the workpiece is placed on the workpiece stopper 148 and a selected/predetermined surface of the workpiece processing tool when this is in working position. The aforementioned predetermined surface can, for example, be a side surface of a saw blade that faces the workpiece stopper 148.

The wireless communication unit 178 of the length control unit 171 is configured to at least receive information from a user-controlled unit 152 about a desired length L_{workpiece} from a first end of a workpiece to a processing location on the workpiece. The length control unit 171 is further configured to position the workpiece stopper148 to the positioning arm 147 in a length L_{workpiece} from the workpiece processing tool 149, by moving the positioning arm 147 until L_{measured} = L_{workpiece}. Thus, the workpiece can be processed to a desired length L_{workpiece} from the first end of the workpiece when the first end rests against the workpiece stopper. The actual processing of the subject is carried out by a user who operates the workpiece processing tool.

According to the invention, the displacement means 170 comprise a gear drive 146 in the drive unit which interacts with a rack of teeth 258 which is mounted on the positioning arm 147 and where the rack of teeth 258 is driven by the tooth gear 146 in the drive unit. Preferably, the drive unit is fixedly mounted under the mounting beam 144 with the rack of teeth projecting upwards from the drive unit and the rack of teeth 258 is mounted on an underside of the positioning arm 147, as shown in fig. 5a. the mounting beam preferably comprises a hole 250 through which the drive gear can act on the rack of teeth. In this embodiment, where the displacement means 170 comprise a gear drive 146 and a rack of teeth, the length gauge 172 can advantageously comprise a rotary encoder 179 mounted on the gear drive 146, as shown in fig. 5c. This is an inexpensive solution that provides good accuracy provided that the grip between the gear drive and the rack of teeth does not slip.

In one embodiment, the drive unit 143 comprises an electric motor 175 which provides the necessary power to drive the displacement means 170. Fig. 5 a and b shows a drive unit where the power source is batteries 262. The drive unit can also be connected to the mains. It is also conceivable that the displacement means are driven by a compressed air motor. In embodiments of the invention where the displacement means 170 comprise a toothed drive 146 that acts on a row of teeth, and the length gauge unit is a rotary encoder 179, it is advantageous that the electric motor 175 is connected to the gear drive 146 with a drive belt 182. The drive belt and the connections of the drive belt are configured to go out of engagement in the event of unexpected influences of the positioning arm before the engagement between the gear drive and the rack of teeth fails. In this way, the rotary encoder 179 will still register the correct position of the workpiece stopper 148 after the unexpected impact.

In an example not according to the invention, the displacement means 170 comprise a drive surface 173 on the positioning arm 147 which cooperates with a drive wheel 174 in the drive unit, as indicated in fig. 9. Friction between the drive surface and the drive wheel enables movement of the positioning arm 147. The drive wheel can e.g. be a rubber wheel that is pressed against the drive surface with a predetermined force produced by a spring load. In this embodiment, a rotary encoder mounted on the drive wheel is less favorable because there will be a greater risk of the drive wheel slipping against the drive surface 173 if, for example, there are impurities on the drive surface or if the positioning arm is exposed to shock. An absolute measurement of the position of the workpiece stopper is much more beneficial when there is a risk of slippage between the drive surface and the drive wheel. There are relatively many such measurement solutions on the market.

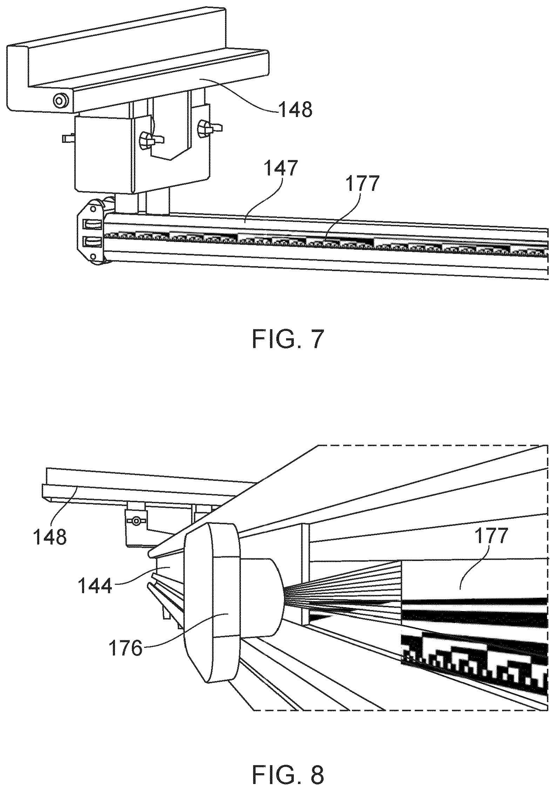

One of these solutions is shown in figures 6 - 9. In fig. 6 shows an optically readable, absolute and binary length indication 177 which is fixed along the length of the positioning arm 147. Fig. 7 shows a positioning arm 147 with workpiece stopper. Preferably, the relative position between the length indication 177 and the workpiece stopper 148 is constant. The subject stopper's position can then be read directly. Fig. 8 shows an optical reader 176 which is attached to the mounting beam 144 and which continuously reads the length indication 177. The optical reader should be placed close to the workpiece processing tool so that short workpiece lengths can also be used. Advantageously, the optical reader 176 can register the length indication through a registration hole 153 in the mounting beam 144 as indicated in fig. 2 and 8. Fig. 9 shows a drive wheel that acts on a drive surface 173 for the positioning arm 147.

Fig. 10 shows another embodiment of the length gauge unit 172. A magnetic or capacitive reader 184 is used where the capacitive or magnetic properties of the length indication 177 change with the length. It is also conceivable to use a rotary encoder 179 connected to a rotating part in a drive line between the motor and positioning arm 147 with frequent corrections, e.g. at each passing of one or more markings with a known distance to the workpiece stopper 148.

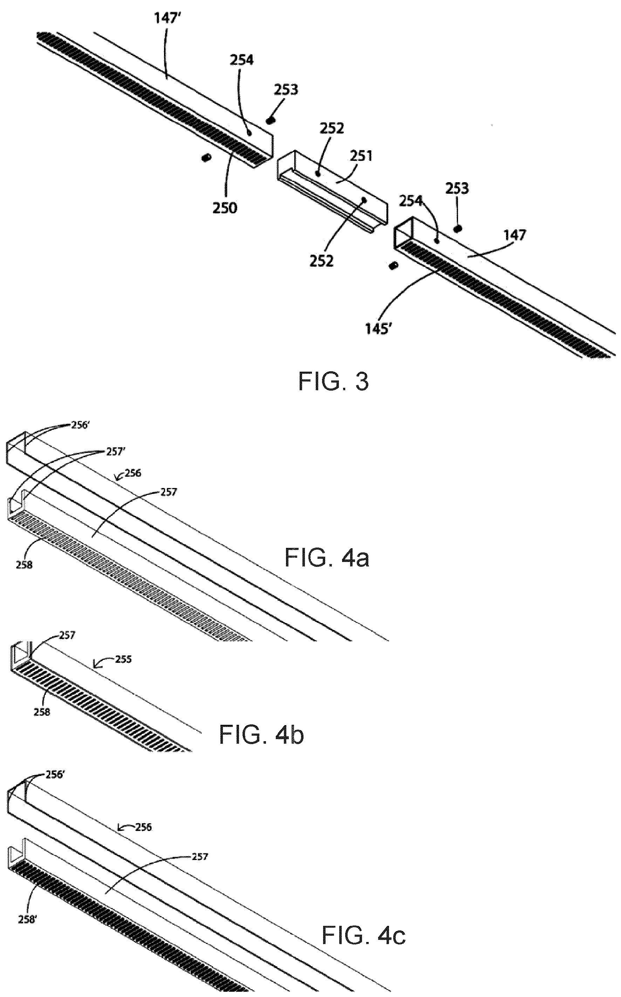

In one embodiment of the positioning arm, shown in fig. 4a-c, the positioning arm 147 comprises a beam with a U-profile 256 of steel with an opening facing downwards and a beam with a U-profile 257 of a plastic material with an opening facing upwards. The U-profile of plastic material fits into the U-profile of steel and the toothed rack 258 is incorporated into the portion of the U-profile of a plastic material which faces downward and is configured to engage with the toothed drive 146 which projects upwardly from the drive assembly 143 which is mounted below the mounting beam 144. As shown in fig. 4a, the two legs 257' of the plastic U-profile fit between the two legs 256' of the steel U-profile so that the legs 257' of the plastic U-profile rest against the bottom of the steel U-profile 256 when the bottom of The plastic U-profile is flush with the ends of the legs 256' of the steel U-profile. Preferably, the gear drive is manufactured from a plastic product or coated with a plastic product. Plastic against plastic causes little wear.

Preferably, the mounting beam 144, as shown in figure 2, comprises an upper surface 180 which is completely covered on both sides of a workpiece stopper groove 181 to prevent material residues from penetrating the gear drive and rack of teeth in the cavity of the mounting beam. The workpiece stopper groove 181 can be provided with brushes that protrude from each side to further prevent impurities or material residues from penetrating into the cavity of the mounting beam 144. An advantageous embodiment shown in fig. 2 has a first longitudinal cavity 191 and that second longitudinal cavity 192 next to the first. The workpiece stopper groove 181 extends inwards towards the workpiece processing tool 149 so that large parts of the mounting beam have a full-covering upper surface. This gives a good weight-to-strength ratio in the mounting beam 144. In the embodiment of the mounting beam in fig, 2, the positioning arm 147 is stored for operation in the first longitudinal cavity 191, while an extension 147' of the positioning arm 147 is located for storage in the second longitudinal cavity 192.

It is also conceivable that the upper surface of the mounting beam is completely unbroken without a workpiece stopper groove 181. In such an embodiment, the workpiece processing tool must be positioned at an end of the mounting beam 144 that faces the workpiece stopper 148 when processing short workpieces. When processing longer workpieces, the workpiece processing tool can be positioned at one end of the mounting beam 144 farthest from the workpiece stopper. The advantage of this design, compared to the design with workpiece stopper groove 181, is that less impurities enter the cavity of the mounting beam. The downside is that the user has to move the workpiece processing tool more often. Alternatively, a stopper extension 132 can be fitted to the workpiece stopper which protrudes above the mounting beam when short workpieces are to be processed.

Advantageously, the positioning arm 147 can be slidably supported in the mounting beam 144. For example, a roller can be fixed on each side of a lower part of an outer end of the mounting beam and a roller on each side of an upper inner end of the positioning arm 147.

The workpiece processing bench 140 is intended for lengths between 1 and 3 meters, although lengths outside this range are also possible. This length gives a weight that can be handled by one person and the possibility of transport in an ordinary car. Often, the workpiece to be processed will be a plank to be sawn, and then a length exceeding 5 meters may be desirable. If lengths are desired that exceed what the positioning arm can reach, an extension arm 147' of the positioning arm 147 can be mounted. As shown in fig. 3, an extension arm 147' of the positioning arm 147 can be joined together by means of a joint piece 251 which fits inside the extension arm 147' and the positioning arm 147 and is fixed with fasteners such as e.g. screws or a click mechanism. To achieve stability, an additional trestle, preferably with a roller on top which the positioning arm can roll, should be positioned along the center line S at a distance from the workpiece processing bench 140 so that the extended positioning arm 147 can rest against and be supported by the trestle.

In an embodiment shown in fig. 3, the extension 147' is attached to the positioning arm 147 by means of a connection piece 251 with two screw holes 252 that fit into corresponding screw holes 254 in the positioning arm 147 and the extension 147' of the positioning arm. The attachment itself takes place by attaching screws 253 in the aforementioned screw holes 253, 254. The extension 147' is usually attached to the positioning arm 147 at the opposite end of the workpiece stopper.

The workpiece processing bench 140 is part of a workpiece processing system that includes at least one user-controlled unit 152 which transmits information about desired workpiece lengths (L_{workpiece}). Such a user-controlled device will typically be a mobile phone with an app or a hand-held length gauge as shown in fig. 11 with communication means that can communicate with the communication unit 178 of the length controller unit 171. If the length gauge unit 172 of the length controller unit 171 is a relative length gauge, such as e.g. a rotary encoder 179, the length controller unit must be calibrated at regular intervals. For this purpose, a calibration unit 183 is needed that can measure the length between the inner side of the workpiece stopper 148 and a predetermined surface of the workpiece processing tool 143. A hand-held length gauge with communication means that can communicate with the communication unit 178 to the length control unit 171 will be able to function as a calibration unit 183. The calibration unit can also be incorporated in the aforementioned user controlled unit 152. Other designs of the calibration unit are also conceivable. The calibration unit can e.g. include a laser meter on the end stop that can be directed to a predetermined surface on the workpiece processing tool. Alternatively, the calibration unit may comprise a laser meter mounted on the workpiece processing tool directed at an inner side of the workpiece stopper.

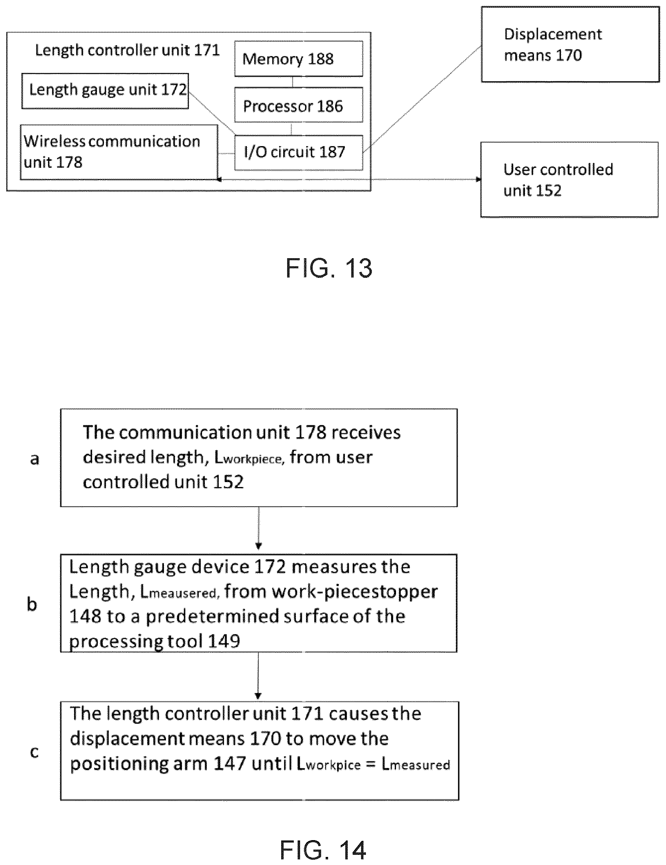

Fig. 13 shows a schematic representation of the length controller unit 171. In addition to previously mentioned length gauge unit 172 and wireless communication unit 178, the length controller unit will typically comprise a processor 186, an input/output circuit 187 and a memory 188 that contains instructions for carrying out a method to use the workpiece processing bench 140.

The method includes the steps illustrated in fig. 14:
a. To receive, with the help of the communication unit 178 in the length control unit 171, a desired length L_{workpiece} from the user-controlled unit 152. The user-controlled unit is used by a user and can e.g. contain a list of the desired goals for the subjects to be processed. For example, it could be a list of all measurements of trusses and panels for a building or part of a building. The user controlled unit 152 can also be a hand-held length gauge where a measured length is transferred to the communication unit 178 of the length controller unit 171.
b. To measure, using the length gauge unit 172, the length, L_{measured}, from the workpiece stopper 148 to a predetermined surface of the workpiece processing tool 149. The predetermined surface can e.g. be the side of a saw blade or drill that faces the workpiece stopper.
c. To move the positioning arm 147 using the displacement means 170 until L_{measured} = L_{workpiece}, if the length control unit 171 registers that L_{measured} is different from L_{workpiece}.

Reference is again made to the schematic representation of the length control unit 171 in fig. 13. The instructions that can be executed by the processor can be software in the form of a computer program. The computer program may be stored in the memory 188 as shown in the figure or contained in a carrier, which may deliver the computer program to the memory 188 and the processor 186. The carrier may be in any suitable form including an electronic signal, an optical signal, a radio signal or a computer-readable storage medium. As used herein, the term "computer readable medium" can be a universal serial bus (USB) memory, a digital versatile disc (DVD), a Blu-ray disc, a software module received as a stream of data, a Flash memory, a hard disk , a memory card, such as a memory stick, a multimedia card (MMC), Secure Digital (SD) card, etc. One or more of the aforementioned examples of computer readable media may be provided as one or more computer program products.

### Reference list

140 Workpiece processing bench
141 Support legs
142 Workpiece
143 Drive unit
144 Mounting beam
146 Gear drive
147 Positioning arm
147' Extension of positioning arm
148 Workpiece stopper
149 Workpiece processing tool
150 Abutment surface for workpiece stopper
152 User controlled unit
153 Registration hole
154 Assembly formation
170 Displacement means
171 Length controller unit
172 Length gauge unit
173 Drive surface
174 Drive wheel
175 Electric motor
176 Optical sensor
177 Absolute length specifications of the positioning arm
178 Communication unit
179 Rotary encoder
180 Upper surface of Mounting beam
181 Workpiece stopper track
182 Drive belt
183 Calibration unit
184 Capacitive reader
185 Magnet
186 Processor
187 I/O circuit
188 Memory
191 First longitudinal cavity in the mounting beam
192 Second longitudinal cavities in the mounting beam
250 Hole in the mounting beam 144 for the displacement means 170
251 Connecting piece
252 Screw hole in the connecting piece 251
253 Connecting screws
254 Screw hole in the positioning arm
256 U-profile made of steel
257 U-profile made of plastic
258 Rack of teeth (e.g. on the plastic U-profile 257)
262 Batteries
264 First locking rail
265 Second locking rail
266 First locking formation
267 Second locking formation

## Claims

1. Movable and demountable workpiece processing bench (140) comprising:
a hollow mounting beam (144) for mounting equipment,
a workpiece processing tool (149) releasably mounted on the mounting beam,
wherein a positioning arm (147) which is mounted movably in a longitudinal direction inside the hollow mounting beam (144) and which includes a workpiece stopper (148) at an end distal from the workpiece processing tool (149),
a drive unit (143), mounted on the mounting beam (144) comprising:
displacement means (170) wherein the displacement means comprises a gear drive (146), which engages in a rack of teeth (258) on the positioning arm (147) to move the positioning arm (147) to a desired position; and
a length control unit (171) for controlling the displacement means, where the length control unit comprises:
a length gauge (172) configured to measure the length L_{measured} from the workpiece stopper (148) to a predetermined surface of the workpiece processing tool (149);
a wireless communication unit (178) configured to at least receive information from a user-controlled device (152) about a desired length of L_{workpiece} from a first end of a workpiece to a processing position on the workpiece, and
where the length control unit (171) is further configured to position the workpiece stopper (148) of the positioning arm (147) at a desired length L_{workpiece} from the workpiece processing tool (149), by moving the positioning arm (147) until L_{measured} = L_{workpiece} so that the workpiece can be processed at a desired length L_{workpiece} from the first end of the workpiece when it rests against the workpiece stopper (148).

2. Workpiece processing bench according to claim 1, wherein the length gauge unit (172) comprises a rotary encoder (179) which is connected to the toothed drive (146).

3. Workpiece processing bench according to claim 1 or claim 2 wherein the length gauge unit (172) comprises an optical sensor (176) attached to the mounting beam (144) which reads absolute length indications (177) attached to the positioning arm (147).

4. Workpiece processing bench according to claim 1, wherein the positioning arm (147) comprises a U-profile (256) of steel with an opening facing downwards and a U-profile (257) of a plastic material with an opening facing upwards and which fits into the U-profile of steel and where the rack of teeth (258) is incorporated into the part of the U-profile (257) made of a plastic material that faces downwards.

5. Workpiece processing bench according to claim 4, where the gear drive (146) is made of a plastic material.

6. Workpiece processing bench according to any of the preceding claims where the drive unit (143) is fixedly mounted under the mounting beam (144).

7. Workpiece processing bench according to any one of the preceding claims, wherein an upper surface (180) of the mounting beam and both sides are unbroken on both sides of a workpiece stopper groove (181) to prevent material residues from penetrating the displacement means (170) and positioning arm (147).

8. Workpiece processing bench according to any of the preceding claims where the positioning arm (147) is rollingly supported in the mounting beam 144.

9. Workpiece processing bench according to any one of the preceding claims, further comprising an extension (147') of the positioning arm (147) which is joined together with an extension piece (251) which fits inside the extension (147') and the positioning arm (147) and is fixed with screws.

10. Workpiece processing bench according to any of the preceding claims, where the drive unit 143 comprises an electric motor.

11. Workpiece processing bench according to claim 10, where the drive unit (143) comprises a drive belt between the electric motor and the gear drive.

12. Workpiece processing system comprising a workpiece processing bench according to claims 1 - 11 and a user-controlled unit (152) configured to send information about desired lengths for processing a workpiece to the wireless communication unit (178).

13. The workpiece processing system according to claim 12 when dependent on claim 2, further comprising a calibration unit (183) configured to determine the distance between the workpiece stopper (148) and a predetermined surface on the workpiece processing tool (143) and to send the determined distance to the communication unit of the length control unit.

14. Method for using the workpiece processing system according to claims 12 and 13, comprising the steps:
a. to receive, using the communication unit (178) in the length control unit (171), a desired length L_{workpiece} from the user-controlled unit (152).
b. to measure, using the length gauge (172), the length, L_{measured}, from the workpiece stopper (148) to a predetermined surface of the workpiece processing tool (149).
c. to move the positioning arm (147) using the displacement means (170) until L_{measured} = L_{workpiece}, if the length control unit (171) registers that L_{measured} is different from L_{workpiece}.

## Patentansprüche

1. Bewegliche und demontierbare Werkstückbearbeitungsbank (140), umfassend:
einen hohlen Montagebalken (144) zur Montage von Ausrüstung,
ein Werkstückbearbeitungswerkzeug (149), das lösbar an dem Montagebalken montiert ist, wobei ein Positionierarm (147), der beweglich in einer Längsrichtung im Inneren des hohlen Montagebalkens (144) montiert ist und der einen Werkstückanschlag (148) an einem von dem Werkstückbearbeitungswerkzeug (149) distalen Ende einschließt, eine an dem Montagebalken (144) montierte Ansteuereinheit (143), umfassend:
Verschiebungsmittel (170), wobei das Verschiebungsmittel einen Zahnradantrieb (146) umfasst, der in eine Zahnstange (258) an dem Positionierarm (147) eingreift, um den Positionierarm (147) in eine gewünschte Position zu bewegen; und
eine Längensteuereinheit (171) zum Steuern des Verschiebungsmittels, wobei die Längensteuereinheit Folgendes umfasst:
ein Längenmesser (172), der dazu konfiguriert ist, die Länge L_{measured} von dem Werkstückanschlag (148) bis zu einer vorgegebenen Oberfläche des Werkstückbearbeitungswerkzeugs (149) zu messen;
eine drahtlose Kommunikationseinheit (178), die dazu konfiguriert ist, zumindest Informationen von einer benutzergesteuerten Vorrichtung (152) über eine gewünschte Länge L_{workpiece} von einem ersten Ende eines Werkstücks bis zu einer Bearbeitungsposition an dem Werkstück zu empfangen, und
wobei die Längensteuereinheit (171) ferner dazu konfiguriert ist, den Werkstückanschlag (148) des Positionierarms (147) in einer gewünschten Länge L_{workpiece} von dem Werkstückbearbeitungswerkzeug (149) zu positionieren, indem der Positionierarm (147) so lange bewegt wird, bis L_{measured} = L_{workpiece} ist, sodass das Werkstück in einer gewünschten Länge L_{workpiece} von dem ersten Ende des Werkstücks bearbeitet werden kann, wenn es an dem Werkstückanschlag (148) anliegt.

2. Werkstückbearbeitungsbank nach Anspruch 1, wobei die Längenmesseinheit (172) einen Drehgeber (179) umfasst, der mit dem Zahnradantrieb (146) verbunden ist.

3. Werkstückbearbeitungsbank nach Anspruch 1 oder Anspruch 2, wobei die Längenmesseinheit (172) einen an dem Montagebalken (144) angebrachten optischen Sensor (176) umfasst, der an dem Positionierarm (147) angebrachte absolute Längenangaben (177) abliest.

4. Werkstückbearbeitungsbank nach Anspruch 1, wobei der Positionierarm (147) ein U-Profil (256) aus Stahl mit einer nach unten gerichteten Öffnung und ein U-Profil (257) aus einem Kunststoffmaterial mit einer nach oben gerichteten Öffnung umfasst, das in das U-Profil aus Stahl passt, und wobei die Zahnstange (258) in den nach unten gerichteten Teil des U-Profils (257) aus Kunststoffmaterial integriert ist.

5. Werkstückbearbeitungsbank nach Anspruch 4, wobei der Zahnradantrieb (146) aus einem Kunststoffmaterial besteht.

6. Werkstückbearbeitungsbank nach einem der vorstehenden Ansprüche, wobei die Ansteuereinheit (143) fest unter dem Montagebalken (144) montiert ist.

7. Werkstückbearbeitungsbank nach einem der vorstehenden Ansprüche, wobei eine Oberseite (180) des Montagebalkens und beide Seiten auf beiden Seiten einer Werkstückanschlagnut (181) ununterbrochen sind, um das Eindringen von Materialrückständen in das Verschiebungsmittel (170) und den Positionierarm (147) zu verhindern.

8. Werkstückbearbeitungsbank nach einem der vorstehenden Ansprüche, wobei der Positionierarm (147) in dem Montagebalken 144 rollend gestützt ist.

9. Werkstückbearbeitungsbank nach einem der vorstehenden Ansprüche, ferner umfassend eine Verlängerung (147') des Positionierarms (147), die mit einem Verlängerungsstück (251) verbunden ist, das in die Verlängerung (147') und den Positionierarm (147) passt und mit Schrauben befestigt ist.

10. Werkstückbearbeitungsbank nach einem der vorstehenden Ansprüche, wobei die Ansteuereinheit 143 einen Elektromotor umfasst.

11. Werkstückbearbeitungsbank nach Anspruch 10, wobei die Ansteuereinheit (143) einen Antriebsriemen zwischen dem Elektromotor und dem Zahnradantrieb umfasst.

12. Werkstückbearbeitungssystem, umfassend eine Werkstückbearbeitungsbank nach den Ansprüchen 1 bis 11 und eine benutzergesteuerte Einheit (152), die dazu konfiguriert ist, Informationen über gewünschte Längen für die Bearbeitung eines Werkstücks an die drahtlose Kommunikationseinheit (178) zu senden.

13. Werkstückbearbeitungssystem nach Anspruch 12, sofern abhängig von Anspruch 2, ferner umfassend eine Kalibriereinheit (183), die dazu konfiguriert ist, den Abstand zwischen dem Werkstückanschlag (148) und einer vorbestimmten Oberfläche an dem Werkstückbearbeitungswerkzeug (143) zu bestimmen und den ermittelten Abstand an die Kommunikationseinheit der Längensteuereinheit zu senden.

14. Verfahren zur Verwendung des Werkstückbearbeitungssystems nach den Ansprüchen 12 und 13, umfassend die folgenden Schritte:
a. Empfangen, unter Verwendung der Kommunikationseinheit (178) in der Längensteuerungseinheit (171), einer gewünschten Länge L_{workpiece} von der benutzergesteuerten Einheit (152).
b. Messen, unter Verwendung des Längenmessers (172), der Länge L_{measured} von dem Werkstückanschlag (148) bis zu einer vorbestimmten Oberfläche des Werkstückbearbeitungswerkzeugs (149).
c. Bewegen des Positionierarms (147) unter Verwendung des Verschiebungsmittels (170), bis L_{measured} = L_{workpiece} ist, falls die Längensteuereinheit (171) registriert, dass L_{measured} von L_{workpiece} abweicht.

## Revendications

1. Banc de traitement de pièce à travailler (140) mobile et démontable comprenant :
une poutre de montage (144) creuse pour le montage d'un équipement,
un outil de traitement de pièce à travailler (149) monté de manière libérable sur la poutre de montage, dans lequel un bras de positionnement (147) qui est monté de manière mobile dans une direction longitudinale à l'intérieur de la poutre de montage (144) creuse et qui comprend une butée de pièce à travailler (148) au niveau d'une extrémité distale de l'outil de traitement de pièce à travailler (149), une unité d'entraînement (143), montée sur la poutre de montage (144), comprenant :
un moyen de déplacement (170), le moyen de déplacement comprenant un entraînement (146) par engrenage qui vient en prise dans une crémaillère (258) sur le bras de positionnement (147) pour déplacer le bras de positionnement (147) dans une position souhaitée ; et
une unité de commande de longueur (171) pour commander le moyen de déplacement, l'unité de commande de longueur comprenant :
une jauge de longueur (172) configurée pour mesurer la longueur L_{mesurée} depuis la butée de pièce à travailler (148) jusqu'à une surface prédéterminée de l'outil de traitement de pièce à travailler (149) ;
une unité de communication sans fil (178) configurée pour au moins recevoir des informations d'un dispositif commandé par un utilisateur (152) concernant une longueur souhaitée L_{pièce} à tᵣₐᵥₐᵢₗₗₑᵣ à partir d'une première extrémité d'une pièce à travailler jusqu'à une position de traitement sur la pièce à travailler, et
l'unité de commande de longueur (171) est en outre configurée pour positionner la butée de pièce à travailler (148) du bras de positionnement (147) à une longueur souhaitée L_{pièce} à tᵣₐᵥₐᵢₗₗₑᵣ à partir de l'outil de traitement de pièce à travailler (149), en déplaçant le bras de positionnement (147) jusqu'à ce que L_{mesurée} = L_{pièce} à travailler de manière à ce que la pièce à travailler puisse être traitée à une longueur souhaitée L_{pièce} à tᵣₐᵥₐᵢₗₗₑᵣ à partir de la première extrémité de la pièce à travailler lorsqu'elle repose contre la butée de pièce à travailler (148).

2. Banc de traitement de pièce à travailler selon la revendication 1, dans lequel l'unité de mesure de longueur (172) comprend un encodeur rotatif (179) qui est relié à l'entraînement (146) denté.

3. Banc de traitement de pièce à travailler selon la revendication 1 ou la revendication 2, dans lequel l'unité de mesure de longueur (172) comprend un capteur optique (176) fixé à la poutre de montage (144) qui lit des indications de longueur absolue (177) fixées au bras de positionnement (147).

4. Banc de traitement de pièce à travailler selon la revendication 1, dans lequel le bras de positionnement (147) comprend un profilé en U (256) en acier avec une ouverture orientée vers le bas et un profilé en U (257) en matière plastique avec une ouverture orientée vers le haut qui s'insère dans le profilé en U en acier et dans lequel la crémaillère (258) est incorporée dans la partie du profilé en U (257) constitué de matière plastique qui est orientée vers le bas.

5. Banc de traitement de pièce à travailler selon la revendication 4, dans lequel l'entraînement (146) par engrenage est constitué d'une matière plastique.

6. Banc de traitement de pièce à travailler selon l'une quelconque des revendications précédentes, dans lequel l'unité d'entraînement (143) est montée de manière fixe sous la poutre de montage (144).

7. Banc de traitement de pièce à travailler selon l'une quelconque des revendications précédentes, dans lequel une surface supérieure (180) de la poutre de montage et les deux côtés sont continus de part et d'autre d'une rainure de butée de pièce à travailler (181) pour empêcher des résidus de matériau de pénétrer dans le moyen de déplacement (170) et le bras de positionnement (147).

8. Banc de traitement de pièce à travailler selon l'une quelconque des revendications précédentes, dans lequel le bras de positionnement (147) est supporté par roulement dans la poutre de montage (144).

9. Banc de traitement de pièce à travailler selon l'une quelconque des revendications précédentes, comprenant en outre une extension (147') du bras de positionnement (147) qui est reliée à une pièce d'extension (251) qui s'insère à l'intérieur de l'extension (147') et du bras de positionnement (147) et qui est fixée à l'aide de vis.

10. Banc de traitement de pièce à travailler selon l'une quelconque des revendications précédentes, dans lequel l'unité d'entraînement (143) comprend un moteur électrique.

11. Banc de traitement de pièce à travailler selon la revendication 10, dans lequel l'unité d'entraînement (143) comprend une courroie d'entraînement entre le moteur électrique et l'entraînement par engrenage.

12. Système de traitement de pièce à travailler comprenant un banc de traitement de pièce à travailler selon les revendications 1 à 11 et une unité commandée par un utilisateur (152) configurée pour envoyer des informations sur des longueurs souhaitées pour le traitement d'une pièce à travailler à l'unité de communication sans fil (178).

13. Système de traitement de pièce à travailler selon la revendication 12, lorsqu'elle dépend de la revendication 2, comprenant en outre une unité d'étalonnage (183) configurée pour déterminer la distance entre la butée de pièce à travailler (148) et une surface prédéterminée sur l'outil de traitement de pièce à travailler (143) et pour envoyer la distance déterminée à l'unité de communication de l'unité de commande de longueur.

14. Procédé d'utilisation du système de traitement de pièce à travailler selon les revendications 12 et 13, comprenant les étapes consistant à :
a. recevoir, en utilisant l'unité de communication (178) de l'unité de commande de longueur (171), une longueur souhaitée L_{pièce} à tᵣₐᵥₐᵢₗₗₑᵣ en provenance de l'unité commandée par un utilisateur (152).
b. mesurer, en utilisant la jauge de longueur (172), la longueur L_{mesurée} depuis la butée de pièce à travailler (148) jusqu'à une surface prédéterminée de l'outil de traitement de pièce à travailler (149).
c. déplacer le bras de positionnement (147) en utilisant le moyen de déplacement (170) jusqu'à ce que L_{mesurée} = L _{pièce à travailler}, si l'unité de commande de longueur (171) enregistre le fait que L_{mesurée} est différente de L_{pièce} à travailler.
